# EUROPEAN PATENT APPLICATION

(11) **EP 2 671 731 A1**
(43) Date of publication of application: **11.12.2013**
(21) Application number: 12741681.6
(22) Date of filing: 27.01.2012
(51) Int. Cl.: B60C 11/117, B60C 11/04, B60C 11/13

(54) **PNEUMATIC TIRE**

(30) Priority: 31.01.2011 JP 2011018399
(71) Applicant: The Yokohama Rubber Co., Ltd., Minato-ku Tokyo 105-8685 (JP)
(72) Inventor: YAEGASHI, Tsuyoshi, Hiratsuka-shi Kanagawa 254-8601 (JP); MORITO, Takumi, Hiratsuka-shi Kanagawa 254-8601 (JP)
(74) Representative: Isarpatent
(86) International application number: PCT/JP2012/051739
(87) International publication number: WO 2012/105425

(57) **Abstract**

A pneumatic tire includes at least three groove rows 21 to 25 at a tread 1 that includes a plurality of both ends closed grooves 2 having both ends closed and extending in a tire width direction. The plurality of both ends closed grooves 2 is arranged at a predetermined distance in a tire circumferential direction. One groove row 23 that includes the both ends closed grooves 2 is disposed on a tire equatorial line E, and at least one groove row 21, 22, 24 and 25 that each includes the both ends closed grooves is disposed at both sides of the groove row 23 on the tire equatorial line E. The both ends closed grooves 2 included in a pair of groove rows adjacent to one another in the tire width direction overlap at end portions in the tire circumferential direction. Each both ends closed groove 2 includes a linear portion 2a and a flexed portion 2b. The linear portion 2a occupies 50% to 90% of a length of the both ends closed groove in the tire width direction. The flexed portion 2b is bent relative to the linear portion 2a at the end portion of the both ends closed groove 2. Thus, a pneumatic tire that achieves excellent running performance on a tarmac road surface and a gravel road surface is provided.

## Description

### TECHNICAL FIELD

The present invention relates to a pneumatic tire preferably used as a rally tire. More specifically, the present invention relates to a pneumatic tire that achieves excellent running performance on a tarmac road surface (paved road) and a gravel road surface (non-paved road).

### BACKGROUND ART

A pneumatic tire for uneven ground running is used for dirt race. As this kind of tire, a tire that includes a large number of blocks partitioned with a deep groove at a tread is available. This tire ensures traction performance with these blocks (for example, see Patent Document 1).

In contrast to this, a pneumatic tire used for a rally held at a course where the tarmac road surface and the gravel road surface are mixed is available. A tread pattern employed for the tread of the tire includes a plurality of both ends closed grooves with both ends closed. This kind of tire can enjoy an edge effect based on the both ends closed groove. The pneumatic tire further ensures rigidity of the tread by minimizing a groove area of the tread as much as possible.

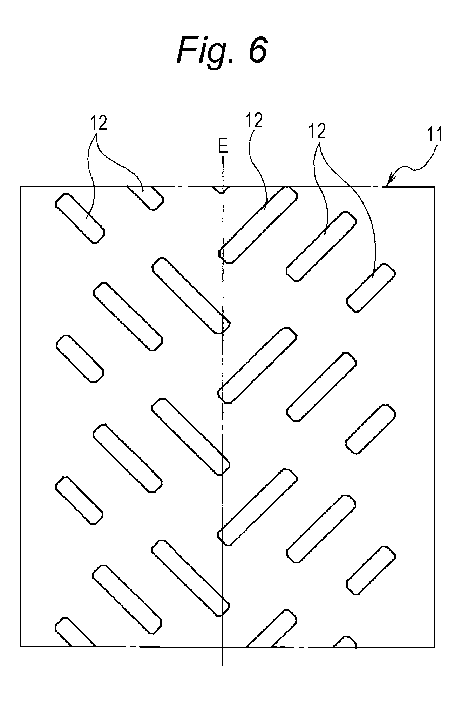

Fig. 6 is an exemplary tread pattern of a conventional pneumatic tire for a rally. As illustrated in Fig. 6, a tread 11 includes a plurality of both ends closed grooves 12. The both ends closed groove 12 inclines relative to a tire width direction and linearly extends. The both ends of the both ends closed groove 12 are closed. These both ends closed grooves 12 are arranged at a predetermined distance in a tire circumferential direction and forms six groove rows. A rotation direction is specified for the pneumatic tire. Each both ends closed groove 12 inclines to one side in the tire circumferential direction (opposite side from a tire rotation direction) from a tire equatorial line E side to outside in the tire width direction.

The above-described conventional pneumatic tire for a rally has obtained a good evaluation in traction performance, braking performance, and cornering performance. While increasing vehicle performance, further improvement in running performance has been requested. However, the current tread pattern does not sufficiently respond to such demands.

### CITATION LIST

### PATENT LITERATURE

Patent Document 1: JP-A-2010-155503

### SUMMARY OF INVENTION

### PROBLEMS TO BE SOLVED BY THE INVENTION

An object of the present invention is to provide a pneumatic tire that achieves excellent running performance on a tarmac road surface and a gravel road surface.

### SOLUTIONS TO THE PROBLEMS

To achieve the above-described object, a pneumatic tire according to the present invention includes at least three groove rows at a tread. The tread includes a plurality of both ends closed grooves having both ends closed and extending in a tire width direction. The plurality of both ends closed grooves is arranged at a predetermined distance in a tire circumferential direction. One groove row that includes the both ends closed grooves is disposed on a tire equatorial line. At least one groove row that each includes the both ends closed grooves is disposed at both sides of the groove row on the tire equatorial line. The both ends closed grooves included in a pair of groove rows adjacent to one another in the tire width direction overlap at end portions in the tire circumferential direction. Each both ends closed groove includes a linear portion and a flexed portion. The linear portion occupies 50% to 90% of a length of the both ends closed groove in the tire width direction. The flexed portion is bent relative to the linear portion at the end portion of the both ends closed groove.

### EFFECTS OF INVENTION

The inventors conducted extensive research about running performance on a tarmac road surface and a gravel road surface. Consequently, the inventors discovered the following and invented the present invention. By specifying an arrangement of both ends closed grooves in a tread and a shape of the both ends closed grooves, an edge component of the both ends closed grooves, which contributes to traction performance, can be effectively increased while sufficiently ensuring rigidity of the tread.

That is, in the present invention, the tread includes at least three groove rows. The groove row includes a plurality of both ends closed grooves that have both ends closed and extend in the tire width direction. The plurality of both ends closed grooves is arranged at a predetermined distance in the tire circumferential direction. One groove row that includes the both ends closed grooves is disposed on the tire equatorial line. At least one groove row that each includes both ends closed grooves is disposed at both sides of the groove row. The both ends closed grooves included in a pair of groove rows adjacent to one another in the tire width direction overlap at end portions in the tire circumferential direction. Each both ends closed groove includes a linear portion with a predetermined length and a flexed portion. This effectively increases an edge component of the both ends closed grooves, which contributes to traction performance. Also, rigidity of the tread is sufficiently ensured. This allows improving running performance on a tarmac road surface and a gravel road surface than that of conventional one.

In the present invention, it is preferred that the linear portion of each of the both ends closed grooves inclines at an angle of 10 degrees to 45 degrees relative to the tire width direction. This allows improving traction performance, braking performance, and cornering performance on the tarmac road surface and the gravel road surface.

It is preferred that the both ends closed grooves included in a pair of groove rows adjacent to one another in the tire width direction be shifted to one another in the tire circumferential direction. This allows increasing the rigidity of the tread, especially, improving the running performance on the tarmac road surface.

It is preferred that the linear portions of the both ends closed grooves included in the pair of groove rows adjacent to one another in the tire width direction incline in opposite directions from one another relative to the tire width direction. This disperses the edge components of the both ends closed groove in various directions to the tread. The edge component in various directions is mixed in a ground surface. This allows improving the traction performance, the braking performance, and the cornering performance on the tarmac road surface and the gravel road surface. Especially, it is preferred that an angle formed by the linear portions of the both ends closed grooves included in the pair of groove rows adjacent to one another in the tire width direction be 90 degrees to 160 degrees.

It is preferred that a curvature radius of the flexed portion of each both ends closed groove be equal to or less than twice a groove width of the both ends closed groove. This allows effectively increasing the edge component of the both ends closed groove and improving the running performance on the tarmac road surface and the gravel road surface.

In the present invention, in all the groove rows including the both ends closed grooves, it is preferred that the both ends closed grooves be arranged at a same number of pitches and a same distance. It is also preferred that a number of arranged groove rows including both ends closed grooves in the tread be five rows. Use of this tread pattern allows providing good running performance on the tarmac road surface and the gravel road surface. The foregoing and other objects, features, aspects and advantages of the invention will become more apparent from the following detailed description when taken in conjunction with the accompanying drawings.

### BRIEF DESCRIPTION OF THE DRAWINGS

Fig. 1 is an expanded view illustrating a tread pattern of a pneumatic tire according to an embodiment of the present invention.
Fig. 2 is an enlarged plan view illustrating a main part of the tread pattern of the pneumatic tire in Fig. 1.
Fig. 3 is a cross-sectional view viewed from an arrow direction X-X in Fig. 2.
Figs. 4A to 4D are plan views illustrating end portions of the respective both ends closed grooves according to various embodiments of the both ends closed grooves.
Figs. 5A to 5D are overall plan views illustrating the respective both ends closed grooves according to various embodiments of the both ends closed grooves.
Fig. 6 is an expanded view illustrating a tread pattern of a conventional pneumatic tire.

### DESCRIPTION OF EMBODIMENTS

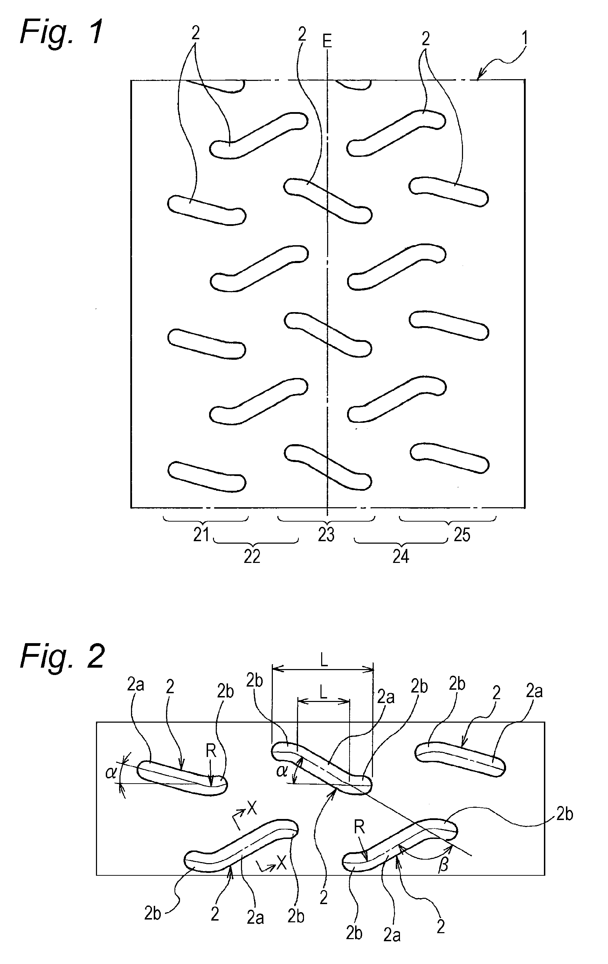

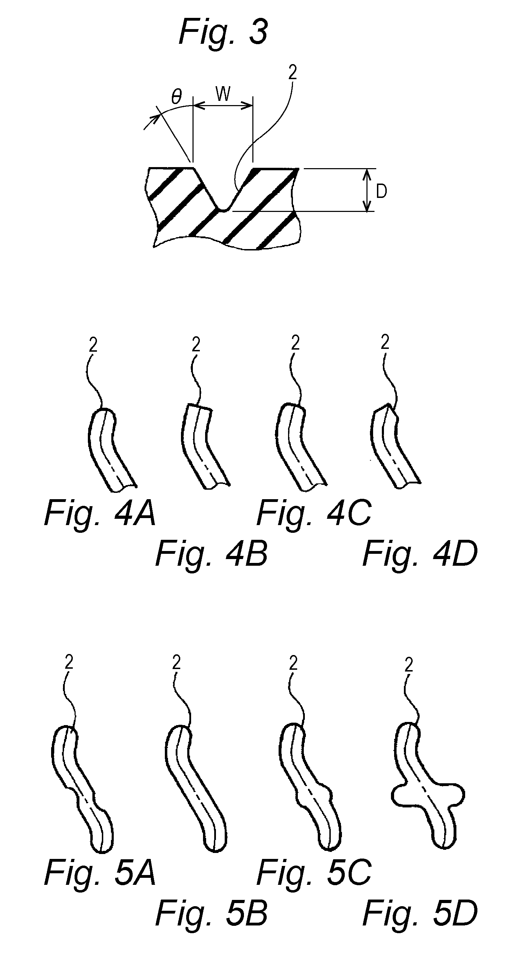

A detailed description will be given of a constitution of an embodiment of the present invention with reference to the attached drawings. Fig. 1 illustrates a tread pattern of a pneumatic tire according to an embodiment of the present invention. Figs. 2 and 3 illustrate main parts of the tread pattern. This pneumatic tire is a rally tire.

As illustrated in Fig. 1, a tread 1 includes a plurality of both ends closed grooves 2 that have closed both ends and extend in a tire width direction. These both ends closed grooves 2 are arranged at a predetermined distance in a tire circumferential direction. These both ends closed grooves 2 form five groove rows 21, 22, 23, 24, and 25. More specifically, the one groove row 23 is disposed on the tire equatorial line E. The groove row 23 includes the plurality of both ends closed grooves 2 aligned in the tire circumferential direction. The two groove rows 21 and 22 are disposed at one side in the tire width direction with respect to the groove row 23. The groove rows 21 and 22 include the plurality of both ends closed grooves 2 aligned in the tire circumferential direction. The two groove rows 24 and 25 are disposed at the other side in the tire width direction with respect to the groove row 23. The groove rows 24 and 25 include the plurality of both ends closed grooves 2 aligned in the tire circumferential direction. Among the groove rows 21 to 25, the both ends closed grooves 2 included in a pair of groove rows adjacent to one another in the tire width direction overlap one another at the end portions in the tire circumferential direction.

Each both ends closed groove 2 includes a linear portion 2a and a flexed portion 2b. The linear portion 2a linearly extends. The flexed portion 2b is bent relative to the linear portion 2a at the end portion of the both ends closed groove 2. As illustrated in Fig. 2, a length L1, which is a length of the linear portion 2a in the tire width direction, occupies 50% to 90% of a length L0, which is a length of the both ends closed groove 2 in the tire width direction. As illustrated in Fig. 3, a groove width W of the both ends closed groove 2 is set to 5 mm to 10 mm, and a groove depth D is set to 3 mm to 8 mm. An inclination angle θ, which is an angle of an inner wall surface of the both ends closed groove 2 relative to a normal direction of a tread surface, is set to 15 degrees to 45 degrees. It is preferred that the groove width W and the groove depth D of the both ends closed groove 2 and the inclination angle θ of the inner wall surface of the both ends closed groove 2 be within the above-described ranges; however, the specifications are not limited to these.

In the pneumatic tire thus configured, the tread 1 includes the groove rows 21 to 25. The groove rows 21 to 25 includes the plurality of both ends closed grooves 2 with both ends closed, which extend in the tire width direction and are arranged at the predetermined distance in the tire circumferential direction. The one groove row 23 that includes the both ends closed grooves 2 is disposed on the tire equatorial line E. The groove rows 21, 22, 24, and 25, which include the both ends closed grooves 2, are disposed at both sides of the groove row 23. Among the groove rows 21 to 25, the both ends closed grooves 2 included in the pair of groove rows adjacent to one another in the tire width direction overlap one another at end portions in the tire circumferential direction. Each both ends closed groove 2 includes the linear portion 2a with the predetermined length L1 and the flexed portion 2b. This allows effectively increasing the edge component, which contributes to traction performance, of the both ends closed groove 2. This also allows sufficiently ensuring rigidity based on the pattern of the tread 1. Consequently, the running performance on the tarmac road surface and the gravel road surface is improved compared with the conventional one.

Here, the length L1, which is the length of the linear portion 2a of each both ends closed groove 2 in the tire width direction, is set to 50% to 90% of the length L0, which is the length of the both ends closed groove 2 in the tire width direction. If the length L1 of the linear portion 2a is less than 50% of the length L0 of the both ends closed groove 2, powerful edge effect based on the linear portion 2a cannot be sufficiently obtained. Therefore, the both ends closed groove 2 needs to be long. Conversely, if the length L1 of the linear portion 2a is more than 90% of the length L0 of the both ends closed groove 2, effect to increase the edge component cannot be sufficiently obtained. Therefore, if the length L1 of the linear portion 2a is outside the range, the edge component of the both ends closed groove 2 cannot be effectively increased while maintaining the rigidity of the tread 1. Hence, improvement effect of the running performance is degraded. Disposing the groove row 23 with the both ends closed grooves 2 thus configured on the tire equatorial line E significantly contributes to improvement of the traction performance.

The pneumatic tire includes the linear portion 2a of each both ends closed groove 2 inclined relative to the tire width direction. As illustrated in Fig. 2, an angle α, which is an angle of the linear portion 2a of the both ends closed groove 2 relative to the tire width direction, is set to 10 degrees to 45 degrees. This allows improving the traction performance, the braking performance, and the cornering performance on the tarmac road surface and the gravel road surface. If the angle α is less than 10 degrees, the edge component against a lateral force is insufficient. Conversely, if the angle α exceeds 45 degrees, the edge component against a longitudinal force is insufficient.

For example, in the groove rows 21 and 25 at a shoulder side, the angle α of the linear portion 2a of the both ends closed groove 2 relative to the tire width direction may be 15 degrees. In the groove rows 22, 23, and 24 at a center side, the angle α of the linear portion 2a of the both ends closed groove 2 relative to the tire width direction may be 30 degrees. Thus, setting the angle α in the groove rows 22, 23, and 24 at the center side larger than the angle α in the groove rows 21 and 25 at the shoulder side has an advantage in improvement of the running performance.

In the pneumatic tire, among the groove rows 21 to 25, the both ends closed grooves 2 included in the pair of groove rows adjacent to one another in the tire width direction is shifted to one another in the tire circumferential direction. More specifically, among the groove rows 21 to 25, the both ends closed grooves 2 included in any groove row is disposed between the both ends closed grooves 2 included in the adjacent groove rows. Thus, dispersing the both ends closed grooves 2 increases the rigidity of the tread 1. Especially, the running performance on the tarmac road surface can be improved.

In the pneumatic tire, among the groove rows 21 to 25, the linear portions 2a of the both ends closed grooves 2 included in the pair of groove rows adjacent to one another in the tire width direction incline in the opposite directions from one another relative to the tire width direction. This disperses the edge component of the both ends closed groove 2 in various directions to the tread 1. The edge component in various directions is mixed in a ground surface of the tread. This allows improving the traction performance, the braking performance, and the cornering performance on the tarmac road surface and the gravel road surface.

Here , as illustrated in Fig. 2, an angle β, which is an angle formed by the linear portions of the both ends closed grooves 2 included in the pair of groove rows adjacent to one another in the tire width direction is preferred to be 90 degrees to 160 degrees. If the angle β is less than 90 degrees, the edge component against the longitudinal force is insufficient. Conversely, if the angle β exceeds 160 degrees, the edge component against the lateral force is insufficient.

The flexed portion 2b of each both ends closed groove 2 has a curvature radius R. The curvature radius R is preferred to be equal to or less than twice the groove width W of the both ends closed groove 2, more preferably, equal to or more than one time and equal to or less than twice. This effectively increases the edge component of the both ends closed groove 2, thus improving the running performance on the tarmac road surface and the gravel road surface. If the curvature radius R of the flexed portion 2b is more than twice the groove width W of the both ends closed groove 2, the edge component becomes insufficient. This degrades the improvement effect of the running performance.

In the pneumatic tire, all the groove rows 21 to 25 include the both ends closed grooves 2 arranged at the same number of pitches and the same distance. Employing this arrangement provides an optimum rigidity to the tread 1. This allows enhancing the improvement effect of the running performance. If necessary, the number of pitches and the distance of the both ends closed grooves 2 in the groove row 21 to 25 may be different.

Figs. 4A to 4D illustrate the both ends closed grooves according to various embodiments. The end portion of the both ends closed groove 2 can be various shapes. For example, in Fig. 4A, the terminating end of the both ends closed groove 2 is formed in an arc shape. In Fig. 4B, the terminating end of the both ends closed groove 2 is formed in a linear shape. In Fig. 4C, the terminating end of the both ends closed groove 2 is formed in a linear shape and the corner portion is chamfered in an arc shape. In Fig. 4D, the terminating end of the both ends closed groove 2 is formed in a bent linear shape. Insofar as the rigidity of the tread 1 is sufficiently ensured, any shape can be selected as the end portion shape of the both ends closed groove 2.

Figs. 5A to 5D illustrate the both ends closed grooves according to various embodiments. The both ends closed groove 2 can be various shapes. For example, in Fig. 5A, the linear portion 2a of the both ends closed groove 2 includes a narrowed part. In Fig. 5B, the linear portion 2a of the both ends closed groove 2 is formed to have a constant width. In Fig. 5C, the linear portion 2a of the both ends closed groove 2 has a small swell part. In Fig. 5D, the linear portion 2a of the both ends closed groove 2 has a large swell part. Insofar as the rigidity of the tread 1 is sufficiently ensured, any shape can be selected as the entire shape of the both ends closed groove 2.

In the above-described preferable embodiments, a case where the number of arranged groove rows including the both ends closed grooves 2 in the tread 1 is five is described. However, in the present invention, the number of arranged groove rows including the both ends closed grooves 2 in the tread 1 may be three rows, seven rows, and others as necessary. Especially, in the case where one groove row is disposed on the tire equatorial line and the number of arranged groove rows of both sides is equal, a tread pattern where the rotation direction and the installation direction of the tire is not limited is formed as illustrated in Fig. 1. This is beneficial in good handing in a scene such as a rally.

### EXAMPLES

Fig. 1 illustrates a pneumatic tire with tire size 210/625 R17. The tread 1 includes five groove rows including a plurality of both ends closed grooves that have both ends closed and extend in a tire width direction. The plurality of both ends closed grooves is arranged at the predetermined distance in the tire circumferential direction. One groove row including the both ends closed grooves is disposed on the tire equatorial line. Two groove rows that each include both ends closed grooves are disposed at both sides of the groove row on the tire equatorial line. The both ends closed grooves included in the pair of groove rows adjacent to one another in the tire width direction overlap at the end portions in the tire circumferential direction. Each both ends closed groove includes the linear portion and the flexed portion. In Table 1, the first to seventh embodiments are listed. In the first embodiment to seventh embodiment, tires were manufactured variously differentiating a rate of the length L1 of the linear portion relative to the length L0 of the both ends closed groove (L1/L0 × 100%), the angle α of the linear portion (degree), the angle β formed by the linear portions (degree), and the rate of the curvature radius R of the flexed portion relative to the groove width W of the both ends closed groove (R/W × 100%).

For comparison, the tire of the first conventional example like that of Fig. 6 was prepared. The tire of the first conventional example includes a tread that includes six groove rows. The six groove rows include a plurality of both ends closed grooves with both ends closed. The both ends closed groove inclines relative to the tire width direction and linearly extends. The both ends closed grooves are arranged at a predetermined distance in the tire circumferential direction.

A tire of the first comparative example and a tire of the second comparative example were prepared. Except that the rate of the length L1 of the linear portion relative to the length L0 of the both ends closed groove was set to 100%, the tire of the first comparative example had the same constitution as that of the first embodiment. Except that the rate of the length L1 of the linear portion relative to the length L0 of the both ends closed groove was set to 0%, the tire of the second comparative example had the same constitution as that of the first embodiment.

In the first conventional example, the first and second comparative examples, and the first embodiment to seventh embodiment, the specifications were set as follows. The groove width W of the both ends closed groove was set to 7.62 mm. The groove depth D of the both ends closed groove was set to 5.5 mm. The inclination angle θ of an inner wall surface of the both ends closed groove relative to a normal direction in a tread surface was set to 30 degrees. A groove area rate of the tread was set to 17%.

These testing tires were evaluated on running performance on a tarmac road surface and a gravel road surface by the following evaluation method. The results are listed in Table 1.

### Running Performance on Tarmac Road Surface:

Each testing tire was mounted on a wheel with a rim size of 17 × 8.0 J, and air pressure of the testing tire after warm-up was set to 230 kPa. The tire was mounted to a four-wheel-drive vehicle with a displacement of 2.0 liters. A running test was conducted in a test course (2 km per circuit) of a dry paved road by a test driver. The measured lap time of five circuits was averaged. The evaluation result is indicated by an index placing the first conventional example as 100 using an inverse of the average value of the lap time. A large index value means excellent running performance on the tarmac road surface.

### Running Performance on Gravel Road Surface:

Each testing tire was mounted on a wheel with a rim size of 17 × 8.0 J, and air pressure of the testing tire after warm-up was set to 230 kPa. The tire was mounted to a four-wheel-drive vehicle with a displacement of 2.0 liters. A running test by a test driver was conducted in a circuit course (2 km per circuit) including a part covered with floating gravel and a part where a ground was scarified. The measured lap time of five circuits was averaged. The evaluation result is indicated by an index placing the first conventional example as 100 using an inverse of the average value of the lap time. A large index value means excellent running performance on the gravel road surface.

**[Table 1]**

| | First Conventional Example | First Comparative Example | Second Comparative Example | First Embodiment | Second Embodiment | Third Embodiment | Fourth Embodiment | Fifth Embodiment | Sixth Embodiment | Seventh Embodiment |
|---|---|---|---|---|---|---|---|---|---|---|
| Rate of Length L1 of Linear Portion (L1/L0 × 100%) | 100 | 100 | 0 | 60 | 50 | 90 | 60 | 60 | 60 | 60 |
| Angle α of Linear Portion (Degree) | 40 | 30 | 30 | 30 | 30 | 30 | 10 | 45 | 30 | 30 |
| Angle β formed by Linear Portions (Degree) | 100 | 120 | 120 | 120 | 120 | 120 | 160 | 90 | 120 | 120 |
| Rate of Curvature Radius R of Flexed Portion (R/W × 100%) | - | - | 12 | 12 | 12 | 12 | 12 | 12 | 10 | 15 |
| Running Performance on Tarmac Road Surface | 100 | 110 | 110 | 130 | 125 | 120 | 120 | 120 | 120 | 115 |
| Running Performance on Gravel Road Surface | 100 | 105 | 105 | 125 | 120 | 115 | 115 | 115 | 115 | 110 |

As apparent from Table 1, the tires of the first to seventh embodiments were greatly improved in the running performance on the tarmac road surface and the gravel road surface compared with the first conventional example. Conversely, since the both ends closed grooves of the tire of the first comparative example were constituted by the linear portion only, improvement effect of the running performance was insufficient. Since the both ends closed grooves of the tire of the second comparative example were constituted by the flexed portion only, the improvement effect of the running performance was insufficient.

This application is based on Japanese Patent Application No. 2011-018399 filed on January 31, 2011 in Japan by the applicant of this application, the disclosure of which is incorporated herein by reference in their entirety.

The above description of specific embodiment of the present invention is disclosed as illustrative. This does not intend to be exhaustive or limit the present invention to the described embodiments as they are. Many modifications and variations will be apparent to one of ordinary skill in the art in light of the above teachings.

### DESCRIPTION OF REFERENCE SIGNS

- 1: tread
- 2: both ends closed groove
- 2a: linear portion
- 2b: flexed portion
- 21 to 25: groove row
- E: tire equatorial line

## Claims

1. A pneumatic tire, comprising
at least three groove rows at a tread that includes a plurality of both ends closed grooves having both ends closed and extending in a tire width direction, the plurality of both ends closed grooves being arranged at a predetermined distance in a tire circumferential direction wherein
one groove row that includes the both ends closed grooves is disposed on a tire equatorial line,
at least one groove row that each includes the both ends closed grooves is disposed at both sides of the groove row on the tire equatorial line,
the both ends closed grooves included in a pair of groove rows adjacent to one another in the tire width direction overlap at end portions in the tire circumferential direction,
each both ends closed groove includes a linear portion and a flexed portion, the linear portion occupying 50% to 90% of a length of the both ends closed groove in the tire width direction, and the flexed portion being bent relative to the linear portion at the end portion of the both ends closed groove.

2. The pneumatic tire according to claim 1, wherein the linear portion of each of the both ends closed grooves inclines at an angle of 10 degrees to 45 degrees relative to the tire width direction.

3. The pneumatic tire according to claim 1 or 2, wherein the both ends closed grooves included in a pair of groove rows adjacent to one another in the tire width direction is shifted to one another in the tire circumferential direction.

4. The pneumatic tire according to any one of claims 1 to 3, wherein the linear portions of the both ends closed grooves included in the pair of groove rows adjacent to one another in the tire width direction incline in opposite directions from one another relative to the tire width direction.

5. The pneumatic tire according to claim 4, wherein an angle formed by the linear portions of the both ends closed grooves included in the pair of groove rows adjacent to one another in the tire width direction is 90 degrees to 160 degrees.

6. The pneumatic tire according to any one of claims 1 to 5, wherein a curvature radius of the flexed portion of each both ends closed groove is equal to or less than twice a groove width of the both ends closed groove.

7. The pneumatic tire according to any one of claims 1 to 6, wherein, in all the groove rows including the both ends closed grooves, the both ends closed grooves are arranged at a same number of pitches and a same distance.

8. The pneumatic tire according to any one of claims 1 to 7, wherein a number of arranged groove rows including both ends closed grooves in the tread is five.
